# EUROPÄISCHE PATENTSCHRIFT

(11) **EP 2 708 018 B1**
(45) Veröffentlichungstag und Bekanntmachung des Hinweises auf die Patenterteilung: **21.03.2018**
(21) Anmeldenummer: 12726343.2
(22) Anmeldetag: 08.05.2012
(51) Int. Cl.: H04N 5/225, G03B 15/00, G03B 17/02

(54) **OPTISCHE AUFNAHMEEINRICHTUNG**
OPTICAL RECORDING DEVICE
DISPOSITIF D'ENREGISTREMENT OPTIQUE

(30) Priorität: 10.05.2011 DE 102011050255
(43) Veröffentlichungstag der Anmeldung: 19.03.2014
(73) Patentinhaber: Jena-Optronik GmbH, 07745 Jena (DE)
(72) Erfinder: MAGERL, Marion, 07747 Jena (DE); SCHMIDT, Uwe, 07616 Bürgel (DE)
(74) Vertreter: Ege Lee & Partner Patentanwälte PartGmbB
(86) Internationale Anmeldenummer: PCT/DE2012/100133
(87) Internationale Veröffentlichungsnummer: WO 2012/152273

(56) Entgegenhaltungen:
- DE-A1-102006 016 533
- US-A1- 2009 268 309
- US-A1- 2010 208 370

## Beschreibung

Die Erfindung betrifft eine optische Aufnahmeeinrichtung in einem Raumflugkörper mit einem lichtsensitiven Element, einer auf dieses fokussierenden Optik, einem Streulichttubus, einer elektronischen Auswerteeinrichtung und einem Gehäuse mit einer Grundplatte.

Gattungsbildende optische Aufnahmeeinrichtungen werden beispielsweise als Sternsensoren zur Navigation, zur Beobachtung des Weltraums, der Planeten und deren Trabanten wie beispielsweise der Erde und des Mondes, der Sonne in Form von Kameras, Spektrometern, Radiometern und dergleichen eingesetzt. Diese sind hierbei an Raumflugkörpern, beispielsweise Satelliten, Weltraumstationen, Raumfähren und dergleichen angebracht. Die besagten optischen Aufnahmeeinrichtungen enthalten dabei ein lichtsensitives Element, beispielsweise einen Detektor in Matrixform wie CCD-Chip, COMS Active Pixel Sensor, eine Photodiode oder dergleichen, auf denen mittels einer entsprechend abgestimmten Optik, beispielsweise einem Objektiv mit einem mehrere Linsen enthaltenden Tubus oder dergleichen der gewünschten Abbildungseffekt erzielt wird. Um Streulichteinflüsse, die beispielsweise durch besonders helle Objekte wie der Sonne erzeugt werden und die Beobachtung lichtschwacher Beobachtungsziele behindern, sind die Optiken durch einen Streulichttubus (Baffel) geschützt, der sich trichterförmig vor der Optik entlang der optischen Achse der optischen Aufnahmeeinrichtung erweitert. Durch die großen Ausmaße des Streulichttubus kann die mechanische Belastung dessen Befestigungseinrichtung an dem Gehäuse der optischen Aufnahmeeinrichtung hoch sein. Infolge des Betriebs im Weltall sind die optischen Aufnahmeeinrichtungen starken Temperaturschwankungen ausgesetzt, die entsprechende Materialausdehnungen zur Folge haben, die zu mechanischen Belastungen und zu einer negativen Veränderung der Abstände der optischen Bauelemente wie Linsen und zu einer Deformation der optischen Achse führen können, die nicht kalibrierbare Abbildungsfehler der Optik zur Folge haben.

Aus dem Stand der Technik ist beispielsweise eine Kamera bekannt, bei der der Objektivtubus der Optik aus einem Feingussteil gebildet ist, in dem Linsen aufgenommen sind. Weiterhin sind an dem Objektivtubus der Detektor, der Streulichttubus und die Auswerteeinheit angebracht. Durch die statische und dynamische mechanische Belastung sowie die thermische Belastung, die durch den Eintrag von Wärme über den Streulichttubus insbesondere während eines Sonnendurchgangs verstärkt wird, werden die Linsen einerseits mechanisch belastet, was zu deren Zerstörung führen kann, und andererseits bezüglich ihrer geometrischen Anordnung zu nicht kompensierbaren Veränderungen wie Allignment- und Offset-Drifts führen. Durch die Anbindung der Elektronikmodule und deren Schnittstellen zum Raumflugkörper kann die Gehäusestruktur überbestimmt werden und die entstehenden mechanischen und thermischen Spannungen werden in die Optik und den Detektor eingebracht und damit nicht kalibrierbare Genauigkeitsverluste ausgebildet.

Die US 2010/0208370 A1 offenbart eine optische Aufnahmeeinrichtung mit einem die Optik enthaltenden Tubus und einem lichtsensitiven Element, welche gemeinsam auf einer Grundplatte aufgenommen sind. Zusätzlich zu dem Tubus ist kein Streulichttubus vorgesehen. Die DE 10 2006 016 533 A1 offenbart eine Vorrichtung zur Halterung und/oder Abdichtung eines optischen Elements, insbesondere einer optischen Linse, welche in einer ersten Position gegenüber einem Halteelement abgedichtet und gegenüber dem Halteelement in einer zweiten Position beweglich ist.

Die US 2009/0268309 A1 offenbart ein Kameramodul mit zwei in einem Tubus untergebrachten, von jeweils einem in dem Tubus untergebrachten Aktuator entlang einer gemeinsamen Achse verlagerbaren Linsengruppen.

Aufgabe der Erfindung ist die Weiterbildung einer optischen Aufnahmeeinrichtung für einen Raumflugkörper mit verbesserten mechanischen und optischen Eigenschaften.

Die Aufgabe wird durch die Merkmale des Anspruchs 1 gelöst. Die optische Aufnahmeeinrichtung für einen Raumflugkörper enthält ein lichtsensitives Element, eine auf dieses fokussierende Optik, einen Streulichttubus, eine elektronische Auswerteeinrichtung und ein Gehäuse mit einer Grundplatte, wobei Optik und lichtsensitives Element eine erste auf der Grundplatte aufgenommene Baueinheit und die Auswerteeinrichtung und der Streulichttubus eine zweite, gegenüber der ersten Baueinheit gegenüber Massekräften entkoppelte Baueinheit bilden. Durch die Entkoppelungen der beiden Baueinheiten ist die Optik gegenüber dem lichtsensitiven Element in der ersten Baueinheit gegen mechanische und thermische Einflüsse der zweiten Baueinheit aus Gehäuse, Elektronik und Streulichtblende geschützt. Die erste Baueinheit ist dabei unter Einhaltung enger Toleranzen, die beispielsweise in einem Sternsensor eine Winkelgenauigkeit kleiner eine Bogensekunde (< 1 arcsec) erlauben aufeinander abgestimmt und auf einer Grundplatte aufgenommen. Dadurch kann die Austrittsöffnung der Optik unmittelbar benachbart zur lichtsensitiven Fläche des lichtsensitiven Elements unter Einhaltung enger Toleranzen angeordnet werden. Beispielsweise kann eine Halterung des lichtsensitiven Elements innerhalb einer Halterung der Optik zentriert und positioniert aufgenommen sein, wobei das lichtsensitive Element gegenüber der Halterung der Optik zusätzlich thermisch isoliert sein kann.

Das lichtsensitive Element kann ein CCD-Chip sein oder ein CMOS Active Pixel Sensor, der als Matrix-Detektor über rasterförmig auf einer Aufnahmefläche verteilte lichtsensitive Kanäle (Pixel) verfügt, deren Lichtsignale beispielsweise zyklisch mit einer vorgegebenen Taktrate von beispielsweise 10 Hertz in einer entsprechenden Auswerteeinrichtung wie Elektronik ausgewertet wie verarbeitet und gespeichert werden, um entsprechende Bildinformationen zu erhalten, die beispielsweise zur Navigation des Raumflugkörpers anhand von Sterndaten, der Weltraum- und/oder Erdbeobachtung und dergleichen dienen können. Hierbei hat sich als besonders vorteilhaft erwiesen, wenn als lichtsensitive Elemente sogenannte aktive Pixel-Sensoren (Active Pixel Sensor, APS) bevorzugt in Form von komplementären Metalloxid-Halbleitern (Complementary Metall Oxide Semiconductors; CMOS) verwendet werden, die gegenüber der Grundplatte und der Optik thermisch isoliert und aktiv beispielsweise mittels eines Peltier-Elements gekühlt sind. Dabei kann das lichtsensitive Element auf einer Leiterplatte lagestabilisiert aufgenommen sein, das in drahtloser oder verdrahteter Signalverbindung mit der der zweiten Baueinheit zugeordneten Auswertelektronik steht.

Die Optik ist den Ansprüchen an die optische Aufgabe der optischen Aufnahmeeinrichtung entsprechend ausgeführt und beispielsweise als auf unendliche Entfernung abgestimmtes Objektiv mit mehreren Linsen und/oder Linsengruppen ausgebildet, die in üblicher Weise in dem Objektivtubus, beispielsweise einen trichterförmigen aus Feinguss, spanend oder in anderer Weise beispielsweise aus Titan oder Aluminium hergestellten Objektivkörper verbaut sind.

Die Grundplatte nimmt im Weiteren die aus dem Gehäuse, dem Streulichttubus und der Auswerteeinrichtung gebildete zweite Baueinheit auf, wobei erste und zweite Baueinheit ausschließlich mittels der Grundplatte gegeneinander positioniert und aufeinander zentriert sind. Dabei weist die zweite Baueinheit einen mit der Grundplatte verbundenen und den Streulichttubus aufnehmenden Gehäuserahmen auf, an dem um die erste Baueinheit angeordnet Elektronikmodule der Auswerteeinrichtung aufgenommen sind. Der Gehäuserahmen kann aus mehreren, beispielsweise an Eckpunkten mit der Grundplatte verbundenen wie eingeschraubten Pfosten gebildet sein, an denen eine Aufnahmeplatte für den Streulichttubus befestigt wird. Weiterhin sind zwischen diesen Pfosten die Elektronikmodule der Auswerteinrichtung befestigt. Diese können in Verbindung mit entsprechenden Abdichtelementen für Strahlung und Staubpartikel ein dichtes Gehäuse bilden. Die Elektronikmodule sind miteinander verbunden und können jeweils einzelne Module für die Datenverarbeitung, die Kommunikation mit dem Raumflugkörper mittels entsprechender Schnittstellen, Datenspeichereinrichtungen aufweisen. Zur Verbindung der einzelnen Elektronikmodule miteinander werden bevorzugt starrflexibel miteinander verbundene Leiterplatten (Starrflex-Leiterplatten) eingesetzt, die ohne Stecker auskommen und daher in dem wartungsfeindlichen Raumflugkörper besonders zuverlässige Verbindungen ausbilden.

Gemäß dem erfinderischen Gedanken kann zwischen erster und zweiter Baueinheit eine thermische Isolierung vorgesehen sein, die durch eine vermindernde thermische Leitfähigkeit der Grundplatte oder der Strukturbauteile der ersten Baueinheit erzielt wird. Hierbei können entsprechend leichte und thermisch schlecht leitende und dennoch ausreichend stabile Materialien Verwendung finden, beispielsweise Titan und dessen Legierungen. Besonders vorteilhaft sind an wenig mechanisch beanspruchten Bereichen und zwischen den Aufnahmen der ersten und zweiten Baueinheit Materialschwächungen wie Ausnehmungen und/oder Durchbrüche vorgesehen, so dass neben einer thermischen Isolation und dem elastischen Ausgleich von unterschiedlichen temperaturbedingten Materialausdehnungen gleichzeitig Gewicht eingespart werden kann.

Es hat sich weiterhin als vorteilhaft erwiesen, wenn die Länge der Optik entlang der optischen Achse am von dem lichtsensitiven Element abgewandten Ende der Optik zumindest unter großer mechanischer Belastung insbesondere beim Start des Raumflugkörpers mit hohen Beschleunigungswerten abgestützt wird. Hierzu kann zwischen den beiden Baueinheiten beispielsweise im Bereich eines Übergangs zwischen Streulichttubus und Optik ein spaltbehafteter Anschlag, beispielsweise in Form eines Ringspalts zwischen der Optik und dem Gehäuse vorgesehen sein, der so bemessen ist, dass eine Verzwängung unter der zu erwartenden thermischen Belastung der optischen Aufnahmeeinrichtung beispielsweise im Wechsel von Sonnenbestrahlung und Sonnenschatten ausgeschlossen ist, eine mechanische Belastung mit einer Relativbewegung der Optik gegenüber dem Gehäuse jedoch abgestützt wird. Hierzu ist das Gehäuse gegenüber der Aufnahme der Optik steif ausgebildet. Der spielbehaftete Anschlag kann gleichzeitig oder alternativ zur Abstützung der Optik eine gegen elektronische Einstrahlung dichte, licht- und/oder partikeldichte, elastische Abstützung (EMC-Dichtung) zwischen den beiden Baueinheiten bilden oder enthalten.

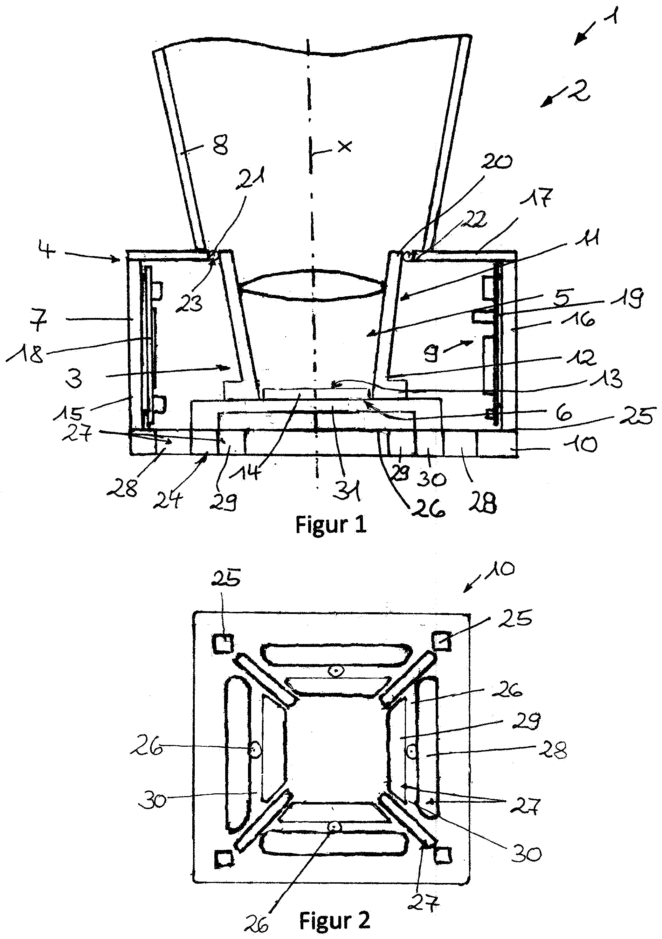

Die Erfindung wird anhand der in den Figuren 1 und 2 dargestellten Ausführungsbeispiele näher erläutert. Dabei zeigen:
- Figur 1: einen Schnitt durch eine als Sternsensor ausgebildete optische Aufnahmeeinrichtung in schematischer Darstellung
- und Figur 2: eine Ansicht der Grundplatte der Figur 1.

Figur 1 zeigt einen Schnitt durch die optische Aufnahmeeinrichtung 1 in Form des Sternsensors 2 mit den beiden Baueinheiten 3, 4. Die Baueinheit 3 beinhaltet die Optik 5 und die Sensoreinheit 6, die Baueinheit 4 das Gehäuse 7, den Streulichttubus 8 und die Auswerteeinrichtung 9. Die beiden Baueinheiten 3, 4 sind auf der Grundplatte 10 fest aufgenommen und im Übrigen voneinander mechanisch entkoppelt.

Die Optik 5 ist in dem gezeigten Ausführungsbeispiel aus dem Objektiv 11 mit dem Objektivtubus 12 und darin fest in einer vorgegebenen Position aufgenommenen Linsen zur Bildung einer Festbrennweite gebildet. Der Objektivtubus 12 ist mittels des Objektivhalters 31 mit der Grundplatte 10 verbunden wie verschraubt. Hierzu ist ein Flansch des Objektivs 11 mit dem Objektivhalter 31 verbunden wie verschraubt. Die Sensoreinheit 6 ist ebenfalls auf dem Objektivhalter 31 aufgenommen. Der Objektivhalter 31 isoliert die Baueinheit 3 gegenüber der Grundplatte 10 und damit gegenüber der Baueinheit 4 sowohl bezüglich Massenkräften als auch gegenüber thermischen Einflüssen. Hierzu ist der Objektivfuß 31 an den zwischen den Durchbrüchen 28, 29 gebildeten Stegen 30 aufgenommen wie verschraubt. Weiterhin kann der Objektivhalter aus thermisch schlecht leitendem Material wie Titan ausgebildet sein. Zur exakten Positionierung des Objektivs 11 gegenüber der Sensoreinheit 6 und letztendlich über die Grundplatte 10 gegenüber der Baueinheit 4 sind entsprechende bevorzugt zwischen Obektivtubus 12 und dem Objektivhalter 31 Positionierungsmittel vorgesehen.

Die Sensoreinheit 6 enthält das direkt unterhalb der Fokussierebene 13 angeordnete lichtsensitive Element 14 beispielsweise in Form eines CCD oder CMOS Active Pixel Sensors, das von einer Deckscheibe, die durchsichtig bevorzugt zum Schutz oder als Filter ausgebildet sein kann, abgedeckt wird und mit einer Vorortelektronik beispielsweise einer Leiterplatte kontaktiert ist. Zwischen dem lichtsensitiven Element 14 und Leiterplatte kann ein Peltierelement zur Kühlung des lichtsensitiven Elements 14 vorgesehen sein. Im Weiteren kann das lichtsensitive Element 14 mittels eines thermisch isolierenden, bevorzugt aus Titan hergestellten, Abstandshalter an der Grundplatte 10 aufgenommen sein und damit thermisch gegen die Leiterplatte, das Objektiv 11 und die Grundplatte 10 ausreichend isoliert vorgesehen sein. Hierbei können lichtsensitives Element 14 und Peltierelement eine thermische Einheit bilden, so dass eine besonders effektive Kühlung und Isolierung dieser thermischen Einheit nach außen erzielt wird. Im Weiteren wird diese thermische Einheit exakt mechanisch gegenüber der Grundplatte 10 und damit gegenüber dem Objektiv 11 und dessen Fokussierebene 13 positioniert und auf die optische Achse x zentriert.

Das Gehäuse 7 der Baueinheit 4 ist aus den Gehäuseplatten 15, 16 und der Aufnahmeplatte 17, an der der Streulichttubus 8 angeordnet ist, gebildet. Der Streulichttubus 8 ist hierbei an der Aufnahmeplatte 17 zentriert aufgenommen und beispielsweise verschraubt. Die Gehäuseplatten 15, 16 sind an nicht einsehbaren Pfosten, die mit der Aufnahmeplatte 17 und der Grundplatte 10 fest verbunden wie verschraubt sind. Grundplatte 10 und Gehäuseplatten 15, 16 können jeweils mittels einer Dichtung 39 gegeneinander abgedichtet sein. An den Gehäuseplatten 15, 16 sind jeweils Leiterplatten 18, 19 teilweise mehrstöckig angeordnet und befestigt.

Im zum Streulichttubus 8 gewandten Endbereich des Objektivs 11 ist der im Wesentlichen zylindrisch oder konisch zulaufende Objektivring 20 angebracht, der mit dem eine zentrale Öffnung bildenden komplementären Ansatz 22 den Ringspalt 23 bildet, der unterschiedliche thermische Ausdehnungskoeffizienten der Materialien des Objektivs 11 und der Aufnahmeplatte 17 ausgleicht, ohne das Objektiv 11 gegen den Ansatz 22 zu verzwängen oder eine mechanische Überbestimmung herbeizuführen. Gleichzeitig wird der Ringspalt 23 so eng ausgebildet, dass größere Relativbewegungen, beispielsweise unter Beschleunigung während des aktiven oder passiven Starts des Raumflugkörpers verhindert werden und daher eine Beschädigung des Objektivs 11 und dessen Aufnahme vermieden wird. Zur elastischen Abstützung des Objektivs 11 ist in dem Ringspalt 23 der elastische, mit Metallanteilen versehenen Dichtring 21 vorgesehen, der infolge seiner Metallanteile zusätzlich den Ringspalt gegen elektromagnetische Einstrahlungen verschließt.

Durch die Trennung der Baueinheiten 3, 4 wird der Streulichttubus 8 von der Baueinheit 3 abgekoppelt und von der Baueinheit 4 getragen. Hierbei ist die Optik 5 mechanisch und thermisch entlastet. Die unterschiedliche Befestigung des Streulichttubus 8 und der Optik 5 hat hierbei unter gegebenen Toleranzen einen geringeren störenden Einfluss als die mechanische Belastung der Optik 5 bei angebautem Streulichttubus 8 und ist unter mechanischer Belastung weniger störanfällig.

Zur Isolierung beziehungsweise Entkoppelung gegenüber Massenkräften zwischen den Baueinheiten 3, 4 ist die Grundplatte 10 mit der Profilstruktur 24 versehen, die gezielt und abhängig von der Positionierung der Aufnahmebereiche 25, 26 der Baueinheiten 3, 4 gegeneinander Materialschwächungen 27 aufweist, die als Durchbrüche 28, 29 vorgesehen sind.

Figur 2 zeigt ein schematisch dargestelltes Ausführungsbeispiel einer Grundplatte 10 in Ansicht, wie sie beispielsweise unter Bezug auf der dort aufgeführten Bezugszeichen in der Aufnahmeeinrichtung 1 verwendet werden kann. An den Aufnahmebereichen 25 ist hierbei die Baueinheit 4, beispielsweise mittels dort befestigter Pfosten fest aufgenommen, an denen wiederum die Gehäuseplatten 15, 16 angebracht und damit die Auswerteeinrichtung 9 mit den Leiterplatten 18, 19 mit der Baueinheit 4 verbunden sind. An den durch die Stege 26 thermisch und gegen Massenkräfte isolierten Aufnahmebereichen 26 ist die Baueinheit 3 mit dem Objektiv 11 und der gegenüber diesem justierten Sensoreinheit 6 mittels des Objektivhalters 31 aufgenommen. Zwischen den Aufnahmen der Baueinheiten 3, 4 sind die Materialschwächungen 27 vorgesehen, die als Durchbrüche 18, 29 vorgesehen sind und parallel, diagonal oder in anderer Weise gegenüber den Außenkanten der Grundplatte 10 angeordnet sein können. Die zwischen den Materialschwächungen 27 verbleibenden Stege 30 sorgen bei ausreichender Isolation der Baueinheiten 3, 4 gegenüber Massenkräften, beispielsweise Schwingungsverlagerungen bei unterschiedlicher Beschleunigung der Baueinheiten 3, 4 gegeneinander oder unterschiedlicher thermischer Ausdehnung dieser für die mechanische Festigkeit der Grundplatte 10, wobei die Verbindung zwischen Aufnahmebereichen 25, 26 und damit der Baueinheiten 3, 4 durch eine labyrinthartige Anordnung der Stege 30 zwischen den Aufnahmebereichen 25, 26 erfolgt. Es versteht sich, dass Art, Umfang und Intensität der Profilstruktur 24 mit Materialschwächungen 27 und Stegen 30 abhängig von der erforderlichen Statik der Aufnahmeeinrichtung 1 auszulegen ist.

Zur Unterstützung der thermischen Isolation des Objektivs 11 und der Sensoreinheit 6 gegenüber der Grundplatte 10 und damit gegenüber der Baueinheit 4 dazwischen liegende Bauteile, beispielsweise der Objektivhalter 31 aus schlecht leitendem und aus Gewichtsgründen spezifisch leichtem Material wie Titan ausgebildet sein.

### Bezugszeichenliste

- 1: Optische Aufnahmeeinrichtung
- 2: Sternsensor
- 3: Baueinheit
- 4: Baueinheit
- 5: Optik
- 6: Sensoreinheit
- 7: Gehäuse
- 8: Streulichttubus
- 9: Auswerteeinrichtung
- 10: Grundplatte
- 11: Objektiv
- 12: Objektivtubus
- 13: Fokussierebene
- 14: lichtsensitives Element
- 15: Gehäuseplatte
- 16: Gehäuseplatte
- 17: Aufnahmeplatte
- 18: Leiterplatte
- 19: Leiterplatte
- 20: Objektivring
- 21: Dichtring
- 22: Ansatz
- 23: Ringspalt
- 24: Profilstruktur
- 25: Aufnahmestelle
- 26: Aufnahmestelle
- 27: Materialschwächung
- 28: Durchbruch
- 29: Durchbruch
- 30: Steg
- 31: Objektivhalter
- x: Optische Achse

## Patentansprüche

1. Optische Aufnahmeeinrichtung (1) für einen Raumflugkörper mit einem lichtsensitiven Element (14), einer auf dieses fokussierenden Optik (5), einem Streulichttubus (8), einer elektronischen Auswerteeinrichtung (9) und einem Gehäuse (7) mit einer Grundplatte (10), **dadurch gekennzeichnet, dass** Optik (5) und lichtsensitives Element (14) eine erste auf der Grundplatte (10) aufgenommene Baueinheit (3) und die Auswerteeinrichtung (9) und der Streulichttubus (8) eine zweite, gegenüber der ersten Baueinheit (3) bezüglich auftretenden Massenkräften entkoppelte Baueinheit (4) bilden, wobei die Grundplatte (10) zwischen Aufnahmestellen (25, 26) der ersten und zweiten Baugruppe (3, 4) Materialschwächungen (27) in Form einer Profilstruktur (24) mit sich abwechselnden Durchbrüchen (28, 29) und Stegen (30) aufweist.

2. Optische Aufnahmeeinrichtung (1) nach Anspruch 1, **dadurch gekennzeichnet, dass** erste und zweite Baueinheit (3, 4) ausschließlich mittels der Grundplatte (10) gegeneinander positioniert und aufeinander zentriert sind.

3. Optische Aufnahmeeinrichtung (1) nach Anspruch 1 oder 2, **dadurch gekennzeichnet, dass** zwischen den beiden Baueinheiten (3, 4) im Bereich eines Übergangs zwischen Streulichttubus (8) und Optik (5) ein Ringspalt (23) vorgesehen ist.

4. Optische Aufnahmeeinrichtung nach Anspruch 3, **dadurch gekennzeichnet, dass** in den Ringspalt (23) ein Dichtring (21) aus elektromagnetisch abschirmendem Material ohne mechanische Überbestimmung eingebracht ist.

5. Optische Aufnahmeeinrichtung (1) nach einem der Ansprüche 1 bis 4, **dadurch gekennzeichnet, dass** die zweite Baueinheit (4) einen mit der Grundplatte (10) verbundenen und den Streulichttubus (8) aufnehmenden Gehäuserahmen aufweist, an dem um die erste Baueinheit (3) angeordnet Leiterplatten (18, 19) der Auswerteeinrichtung (9) aufgenommen sind.

6. Optische Aufnahmeeinrichtung (1) nach Anspruch 5, **dadurch gekennzeichnet, dass** die Leiterplatten (18, 19) starrflexibel miteinander verbunden sind.

7. Optische Aufnahmeeinrichtung (1) nach einem der Ansprüche 1 bis 6, **dadurch gekennzeichnet, dass** zwischen Grundplatte (10) und erster Baueinheit (3) eine thermische Isolierung vorgesehen ist.

8. Optische Aufnahmeeinrichtung (1) nach Anspruch 7, **dadurch gekennzeichnet, dass** die thermische Isolierung durch Verwendung von Bauteilen aus Titan hergestellt ist.

## Claims

1. Optical recording device (1) for a spacecraft comprising a light-sensitive element (14), a lens (5) focussing on the latter, a scattered light lens barrel (8), an electronic evaluation device (9) and a housing (7) with a base plate (10), **characterised in that** the lens (5) and light-sensitive element (14) form a first unit (3) mounted on the base plate (10) and the evaluation device (9) and the scattered light lens barrel (8) form a second unit (4) unconnected from the first unit (3) with regard to any occurring mass forces, wherein the base plate (10) has material weakenings (28, 29) in the form of a profile structure (24) with alternating openings (28, 29) and webs (30) between mounting areas (25, 26) of the first and second unit (3, 3a, 4, 4a).

2. Optical recording device (1) according to claim 1, **characterised in that** the first and second unit (3, 4) are positioned relative to one another exclusively by means of the base plate (10) and centred on top of one another.

3. Optical recording device (1) according to claim 1 or 2, **characterised in that** an annular gap (23) is provided between the two units (3, 4) in the area of a transition between the scattered light lens barrel (8) and lens (5).

4. Optical recording device according to claim 3, **characterised in that** a sealing ring (21) made from an electromagnetically shielding material is inserted into the annular gap (23) without mechanical redundancy.

5. Optical recording device (1) according to any of claims 1 to 4, **characterised in that** the second unit (4) comprises a housing frame connected to the base plate (10) and mounting the scattered light lens barrel (8), on which housing frame circuit boards (18, 19) of the evaluation device (9) arranged around the first unit (3) are mounted.

6. Optical recording device (1) according to claim 5, **characterised in that** the circuit boards (18, 19) are connected to one another in a rigid-flexible manner.

7. Optical recording device (1) according to any of claims 1 to 6, **characterised in that** thermal insulation is provided between the base plate (10) and first unit (3).

8. Optical recording device (1) according to claim 7, **characterised in that** the thermal insulation is provided by using components made of titanium.

## Revendications

1. Dispositif de prise de vue (1) optique pour un engin spatial, comportant un élément (14) sensible à la lumière, une optique (5) focalisant celui-ci, un tube de lumière diffusée (8), un dispositif d'évaluation (9) électronique et un boîtier (7) avec une plaque de base (10), **caractérisé en ce que** l'optique (5) et l'élément (14) sensible à la lumière forment une première unité de construction (3) montée sur la plaque de base (10), et **en ce que** le dispositif d'évaluation (9) et le tube de lumière diffusée (8) forment une deuxième unité de construction (4) découplée vis-à-vis de la première unité de construction (3) du point de vue de forces massiques qui se produisent, la plaque de base (10) présentant entre des points de montage (25, 26) des première et deuxième unités de construction (3, 4) des affaiblissements de matériau (27) sous la forme d'une structure profilée (24) avec des percées (28, 29) et des traverses (30) en alternance.

2. Dispositif de prise de vue (1) optique selon la revendication 1, **caractérisé en ce que** les première et deuxième unités de construction (3, 4) sont positionnées l'une contre l'autre et centrées l'une par rapport à l'autre uniquement au moyen de la plaque de base (10).

3. Dispositif de prise de vue (1) optique selon les revendications 1 ou 2, **caractérisé en ce qu'**une fente annulaire (23) est prévue entre les deux unités de construction (3, 4) dans la zone d'un passage entre le tube de lumière diffusée (8) et l'optique (5).

4. Dispositif de prise de vue (1) optique selon la revendication 3, **caractérisé en ce que** dans la fente annulaire (23) est insérée une bague d'étanchéité (21) en matériau de blindage électromagnétique sans surdétermination mécanique.

5. Dispositif de prise de vue (1) optique selon l'une des revendications 1 à 4, **caractérisé en ce que** la deuxième unité de construction (4) présente un cadre de boîtier relié à la plaque de base (10) et recevant le tube de lumière diffusée (8), sur lequel sont montées des plaquettes à circuit imprimé (18, 19) agencées autour de la première unité de construction (3).

6. Dispositif de prise de vue (1) optique selon la revendication 5, **caractérisé en ce que** les plaquettes à circuit imprimé (18, 19) sont reliées l'une à l'autre de manière rigide-flexible.

7. Dispositif de prise de vue (1) optique selon l'une des revendications 1 à 6, **caractérisé en ce qu'**une isolation thermique est prévue entre la plaque de base (10) et la première unité de construction (3).

8. Dispositif de prise de vue (1) optique selon la revendication 7, **caractérisé en ce que** l'isolation thermique est réalisée en utilisant des éléments de construction en titane.
